# EUROPEAN PATENT APPLICATION

(11) **EP 4 365 867 A1**
(43) Date of publication of application: **08.05.2024**
(21) Application number: 22832484.4
(22) Date of filing: 17.03.2022
(51) Int. Cl.: G08G 1/00, B60W 40/06, B60T 8/172, G01N 21/47

(54) **ROAD SURFACE STATE DETERMINATION SYSTEM, ROAD SURFACE STATE DETERMINATION DEVICE, VEHICLE DRIVING CONTROL DEVICE, AND ROAD SURFACE STATE DETERMINATION METHOD**

(30) Priority: 29.06.2021 JP 2021107604
(71) Applicant: IHI Corporation, Tokyo 135-8710 (JP)
(72) Inventor: KATSUKI Yoshio, Tokyo 135-8710 (JP)
(74) Representative: Marks & Clerk LLP
(86) International application number: PCT/JP2022/012216
(87) International publication number: WO 2023/276321

(57) **Abstract**

A road surface condition determination system (50) includes: a ranging sensor (10) that is installed at a predetermined position in a vehicle, emits light toward a road surface in a measurement area around the vehicle and receives reflected light of the emitted light, and measures a distance to the road surface based on a light reception state of the reflected light; and a determination unit (413) that determines that the road surface is wet when the reflected light is not received by the ranging sensor, or when a measurement value measured by the ranging sensor (10) is longer than a predetermined value.

## Description

### TECHNICAL FIELD

The present disclosure relates to a road surface condition determination system, a road surface condition determination device, a vehicle driving control device, and a road surface condition determination method.

### BACKGROUND ART

In a case where a vehicle travels on a road, when the road surface is wet due to rain or the like, the friction coefficient between the wheels and the road surface becomes low, and thus the braking distance of the vehicle increases. In this case, the vehicle cannot stop at an expected position when applying brakes, thereby making it difficult to drive safely. For this reason, it is necessary to change the way in which the vehicle is driven such as reducing the traveling speed or applying brakes earlier.

### CITATION LIST

### PATENT LITERATURE

Patent Literature 1: JP 2000-39311 A

### SUMMARY OF THE INVENTION

### TECHNICAL PROBLEM

In a vehicle that performs automatic driving, the road surface condition is monitored during the travel of the vehicle, and if the road surface is detected to be wet, the vehicle performs control such as reducing the driving speed, thereby performing safe driving.

In order to detect a road surface condition that is wet, there is a system constructed by mounting a device that is dedicated to detecting the road surface condition on a vehicle, such as a camera device or a laser device that emits multiple laser beams (see Patent Literature 1). However, when this kind of a device is newly mounted on a vehicle, the system configuration becomes complicated, thereby increasing the cost.

The present disclosure has been made in view of the above circumstances, and an object of the present disclosure is to provide a road surface condition determination system, a road surface condition determination device, a vehicle driving control device, and a road surface condition determination method with which it is possible to detect a wet road surface with high accuracy in a simple configuration.

### TECHNICAL SOLUTION

A road surface condition determination system according to the present disclosure includes: a ranging sensor that is installed at a predetermined position in a vehicle, emits light toward a road surface in a measurement area around the vehicle and receives reflected light of the emitted light, and measures a distance to the road surface based on a light reception state of the reflected light; and a determination unit that determines that the road surface is wet when the reflected light is not received by the ranging sensor, or when a measurement value measured by the ranging sensor is longer than a predetermined value.

The ranging sensor may measure a distance to a plurality of points on the road surface in the measurement area, and the determination unit may determine that the road surface is wet when the measurement area includes a partial area in which the reflected light is not received by the ranging sensor, or when the measurement incudes a partial area in which a measurement value measured by the ranging sensor is longer than a predetermined value.

The determination unit may determine that the road surface is wet when a quantity of measurement results recognized as noise among measurement results regarding reflected light of a plurality of light beams emitted by the ranging sensor is equal to or greater than a predetermined value and when a partial area in which the reflected light of the plurality of light beams emitted by the ranging sensor is not received is included in the measurement area.

The ranging sensor may be configured of a light sensor for obstacle detection or a light sensor for self-position estimation, which is installed in advance in the vehicle.

The road surface condition determination system further includes a reference data storage unit that stores, as reference data, information on a distance to the road surface that is measured by the ranging sensor for each position of the vehicle and each measurement direction when the vehicle or another vehicle travels on the road surface that is not wet, in which in a case where the vehicle travels, the determination unit may determine that the road surface is wet when a measurement value of the distance to the road surface in the measurement direction measured by the ranging sensor at a predetermined position is longer than a distance to the road surface at a relevant position and in the measurement direction in the reference data.

The reference data storage unit may temporarily store information of measurement values for each vehicle position, time, and measurement direction, measured by the ranging sensor when the vehicle or another vehicle travels, regardless of a wet condition of the road surface, and the determination unit may determine whether the road surface is wet with respect to a position where the vehicle is scheduled to travel, by using the information of the measurement values which are measured using another vehicle and stored in the reference data storage unit within a predetermined time.

Further, a road surface condition determination device according to the present disclosure includes: a determination unit that is connected to a ranging sensor, the ranging sensor being installed at a predetermined position in a vehicle, emitting light toward a road surface in a measurement area around the vehicle and receiving reflected light of the emitted light, and measuring a distance to the road surface based on a light reception state of the reflected light. The determination unit determines that the road surface is wet when the reflected light is not received by the ranging sensor, or when a measurement value measured by the ranging sensor is longer than a predetermined value.

Further, a vehicle driving control device according to the present disclosure includes: an output unit that is connected to the road surface condition determination device, and outputs an instruction to reduce a driving speed of the vehicle or stop the vehicle when the road surface condition determination device determines that the road surface is wet.

Further, a road surface condition determination method according to the present disclosure includes: determining that a road surface is wet by means of a road surface condition determination device connected to a ranging sensor, when reflected light is not received by the ranging sensor or when a measurement value measured by the ranging sensor is longer than a predetermined value, the ranging sensor being installed at a predetermined position in a vehicle, emitting light toward a road surface in a measurement area around the vehicle and receiving the reflected light of the emitted light, and measuring a distance to the road surface based on a light reception state of the reflected light.

### EFFECT OF THE INVENTION

A road surface condition determination system, a road surface condition determination device, a vehicle driving control device, and a road surface condition determination method make it possible to detect a wet road surface with high accuracy in a simple configuration.

### BRIEF DESCRIPTION OF THE DRAWINGS

FIG. 1 is a block diagram illustrating a configuration of an automatic driving system using a road surface condition determination system according to an embodiment.
FIG. 2(a) is a diagram illustrating a vehicle X mounted with the road surface condition determination system according to the embodiment and illustrating a measurement direction of a ranging sensor installed in the vehicle X viewed from a lateral side, and FIG. 2(b) is a diagram illustrating a measurement area of the ranging sensor viewed from a top side.
FIG. 3 is a flowchart illustrating an operation of the road surface condition determination device according to the embodiment.
FIG. 4(a) is a diagram illustrating a state in which light emitted from the ranging sensor installed in the vehicle X, which is mounted with the road surface condition determination system according to the embodiment, is reflected by a puddle on the road surface, and FIG. 4(b) is a diagram illustrating a state in which light emitted from the ranging sensor is reflected by a puddle on the road surface and reflected by a wall in front of the vehicle X.

### DESCRIPTION OF EMBODIMENTS

### <Configuration of Automatic Driving System>

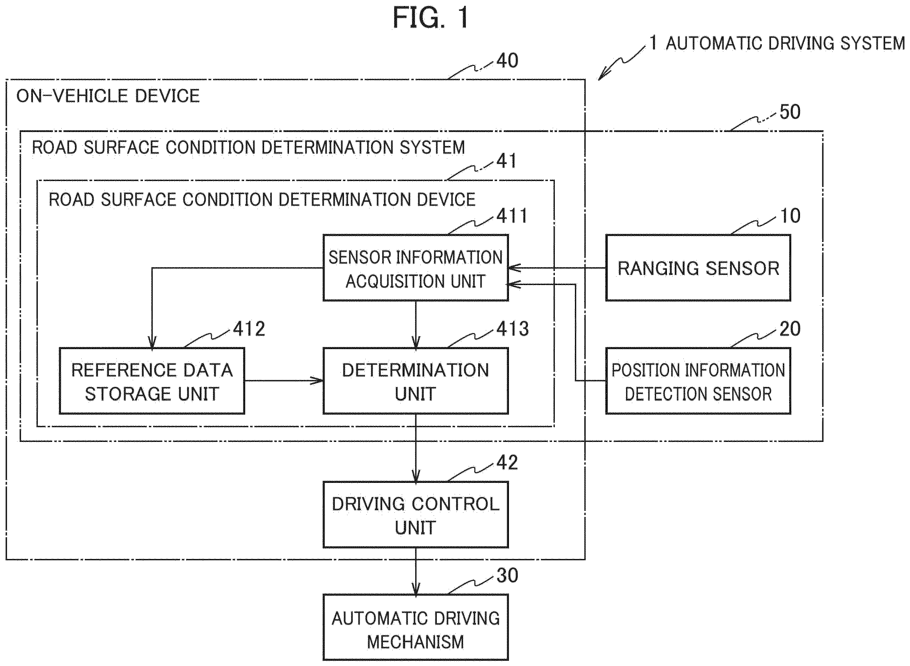

A configuration of an automatic driving system 1 using a road surface condition determination device according to an embodiment of the present disclosure will be described with reference to FIG. 1. The automatic driving system 1 includes a ranging sensor 10 mounted on a vehicle X performing automatic driving, a position information detection sensor 20, an automatic driving mechanism 30, and an on-vehicle device 40.

The ranging sensor 10 is a light sensor using LiDAR (light detection and ranging) or the like. The ranging sensor 10 is installed in the front part of the vehicle X. For example, the ranging sensor 10 is installed at a predetermined position in the lower part of the front part in the vehicle X. The ranging sensor 10 emits light toward a road surface in a measurement area P around the vehicle X (that is, in a predetermined direction (measurement direction)) and receives reflected light of the emitted light. Further, the ranging sensor 10 measures the distance to the road surface, based on a light reception state of the reflected light. The distance to be measured is a length from the vehicle X (specifically, the ranging sensor 10) to a predetermined point of the road surface (a light irradiation position) along a predetermined direction (a measurement direction). Here, the light reception state is a measurement result indicating a measurement direction performed by the ranging sensor 10, the time from light emission performed by the ranging sensor 10 until the reception of the reflected light of the light, the intensity of the reflected light, and the like. A light sensor as the ranging sensor 10 may be, for example, a light sensor for obstacle detection or a light sensor for self-position estimation, which is mounted in advance on the vehicle X. In this case, the automatic driving system 1 can be constructed without providing a new device as the ranging sensor 10 in the vehicle X.

The position information detection sensor 20 is configured of, for example, a GPS (Global Positioning System) receiver, and acquires position information of the sensor 20 (practically, the vehicle X). The automatic driving mechanism 30 is a mechanism for automatically driving the vehicle X based on the control of the driving control unit 42 described later.

The on-vehicle device 40 includes a road surface condition determination device 41, and a driving control unit 42 serving as a vehicle driving control device. The road surface condition determination device 41 has a sensor information acquisition unit 411, a reference data storage unit 412, and a determination unit 413. These functional units may be mounted on a processing device such as a computer (e.g., a personal computer). Thus, the processing device functions as the road surface condition determination device 41. The processing device may be installed in advance in the vehicle X as a device for processing a detection result of an obstacle detection sensor or a self-position estimation sensor.

The sensor information acquisition unit 411 acquires information on the distance from the vehicle X to the road surface in the measurement area P that is measured by the ranging sensor 10, and acquires position information on the vehicle X detected by the position information detection sensor 20. The reference data storage unit 412 stores in advance, as reference data, the information on the distance from the vehicle X to the road surface which is measured by the ranging sensor 10 for each position and each measurement direction of the vehicle X when the vehicle X travels on a road surface that is not wet in a predetermined section (assumed traveling section).

Based on the information acquired by the sensor information acquisition unit 411 in a case where the vehicle X travels, the determination unit 413 determines that the road surface is wet (a) when the reflected light of each light beam emitted by the ranging sensor 10 is not received by the ranging sensor 10, or (b) when a measurement value of the distance measured by the ranging sensor 10 is longer than a predetermined value. In this embodiment, a road surface condition determination system 50 is configured of the road surface condition determination unit 41 and the ranging sensor 10.

When the determination unit 413 of the road surface condition determination device 41 has determined that the road surface is wet, the driving control unit 42 outputs an instruction to the automatic driving mechanism 30 to perform driving at a higher safety level than during normal driving, such as reducing the driving speed of the vehicle X or stopping the vehicle X. That is, the driving control unit 42 includes an output unit for outputting such an instruction, or functions as an output unit.

### <Operation of Automatic Driving System>

Next, an operation performed by the automatic driving system 1 according to the present embodiment during the travel of vehicle X will be described. In the present embodiment, during the travel of vehicle V in a predetermined section with automatic driving using the automatic driving mechanism 30, the ranging sensor 10 installed in the vehicle X measures a distance from the vehicle X (the ranging sensor 10) to the road surface in a measurement area around the vehicle X at predetermined time intervals.

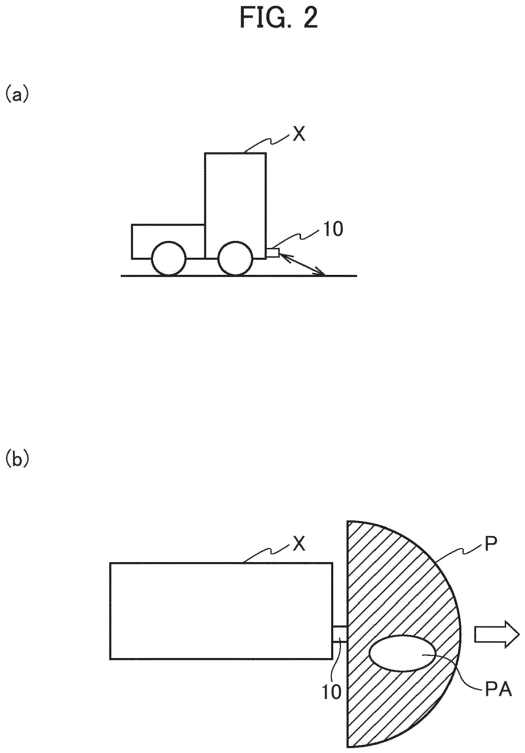

As illustrated in FIG. 2(a), the ranging sensor 10 measures the distance to a plurality of points on the road surface in the area around the vehicle X, based on the reception state of the reflected light of each light beam emitted in the plurality of directions which are set in advance as the measurement directions.

As illustrated in FIG. 2(b), for example, an area where the light of the ranging sensor 10 is emitted is, for example, the measurement area P around the vehicle X including the front and the left-right directions when the vehicle X travels in the direction of the arrow. The ranging sensor 10 emits a plurality of lasers in different directions in the measurement area P, and measures the distance from the vehicle X to a plurality of points on the road surface in the measurement area P, based on the reception state of the reflected light of the emitted light.

Further, during the travel of vehicle X, the position information detection sensor 20 detects the position information of the sensor 20 (practically, the vehicle X) at predetermined time intervals.

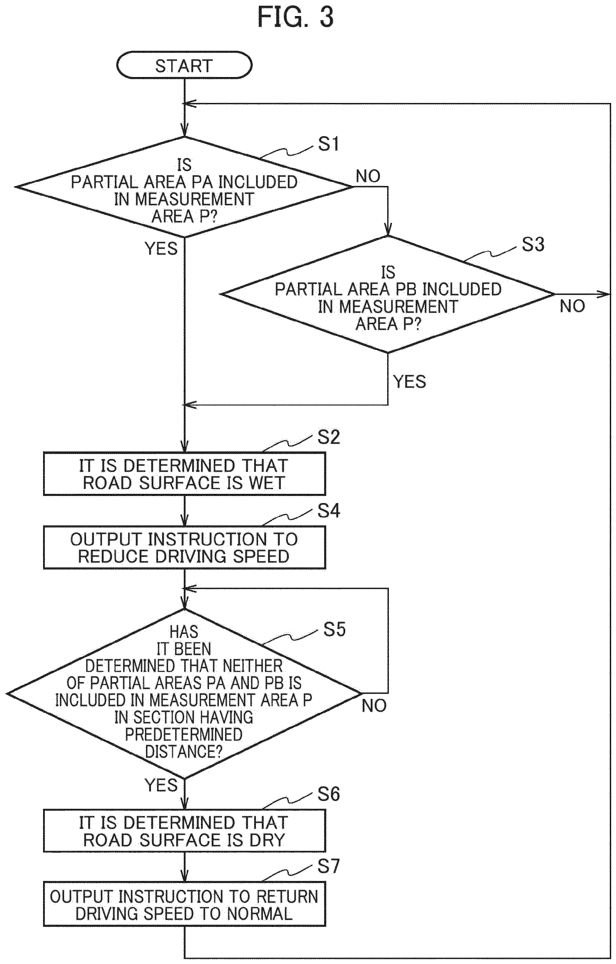

An example of processing performed by the on-vehicle device 40 during the travel of vehicle X will be described with reference to the flowchart of FIG. 3. When the vehicle X is traveling at a normal speed, the sensor information acquisition unit 411 acquires measurement result information measured by the ranging sensor 10 at predetermined time intervals, and also acquires position information of the position information detection sensor 20 detected by the sensor 20.

Based on the information acquired by the sensor information acquisition unit 411, the determination unit 413 determines whether the reflected light of each light beam emitted in a plurality of directions in the measurement area P from the ranging sensor 10 is received by the ranging sensor 10.

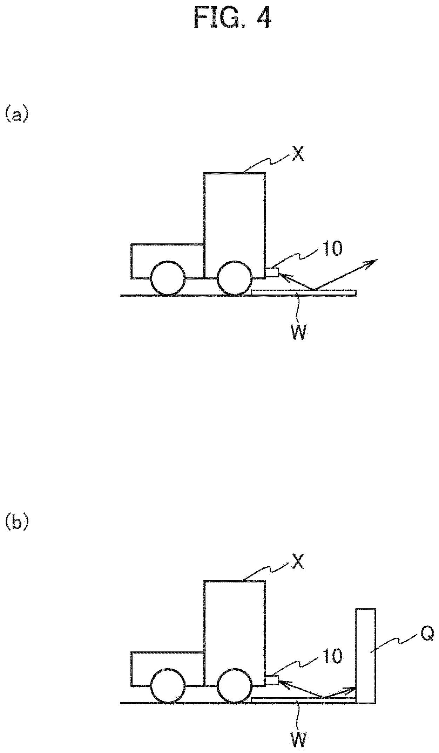

Here, it is assumed that the road surface to which the light is emitted by the ranging sensor 10 is wet. For example, as illustrated in FIG. 4(a), when there is a puddle W at the position where the light of the ranging sensor 10 is emitted, the emitted light is reflected in an irregular manner on the upper surface of the puddle W. For this reason, the reflected wave does not advance to the ranging sensor 10, or even if having advanced to the ranging sensor 10, the intensity of the reflected wave is significantly attenuated, and thus practically the ranging sensor 10 cannot receive the reflected light (that is, at the intensity within the assumed range). Therefore, when a partial area PA in which the reflected light of each light beam emitted by the ranging sensor 10 is not received by the ranging sensor 10 is included in the measurement area P ("YES" in step S1), the determination unit 413 determines that the road surface indicated by the partial area PA is wet (step S2).

When it is determined that the partial area PA is not included in the measurement area P ("NO" in step S1), the determination unit 413 determines whether a partial area PB is included (step S3). The partial area PB is an area where a measurement value of the distance measured by the ranging sensor 10 is longer than a threshold value C.

When a road surface to which the light is emitted by the ranging sensor 10 is wet and there is an obstacle in front of the wet road surface, the light emitted by the ranging sensor 10 is reflected in an irregular manner on the wet road surface, then reflected by the obstacle, and reflected again on the wet road surface and received by the ranging sensor 10.

For example, as illustrated in FIG. 4(b), when there is a puddle W at the light irradiation position and a wall Q is in front of the puddle W, the light is reflected in an irregular manner on the upper surface of the puddle W, then reflected on the wall Q, and reflected again on the puddle W and received by the ranging sensor 10. In this case, a measurement value of the distance measured by the ranging sensor 10 is longer than the distance from the ranging sensor 10 to the road surface (the irradiation position, that is, the puddle W).

Therefore, as illustrated in FIG. 2(b), if the partial area PB is included in the measurement area P ("YES" in step S3), the determination unit 413 determines that the road surface is wet (step S3). The threshold value C used in step S3 can be defined from various viewpoints. Hereinafter, the determination processing of the road surface condition executed in step S3 based on some examples of the threshold value C will be described.

### [Determination Processing Example of Road Surface Condition (1)]

In the determination processing example (1), a threshold value C1 is used as the threshold value C. The threshold value C1 is the maximum value of the measurement distance from the vehicle X to the road surface that can be assumed from the installation position of the ranging sensor 10 in the vehicle X, the measurement direction, and the unevenness of the road surface. Based on the information acquired by the sensor information acquisition unit 411, the determination unit 413 determines that the road surface is wet if the partial area PB is included in the measurement area P. The threshold value C1 may be set at a different value for each measurement direction of the ranging sensor 10.

Here, the determination unit 413 determines that the partial area PB is included in the measurement area P if the positions where the measurement values measured by the ranging sensor 10 are longer than the threshold value C1 are adjacent on the road surface and the number of the above positions is equal to or greater than a predetermined number D. For example, the predetermined number D is set in advance as a value for detecting a wet condition of the road surface that may affect the travel of the vehicle X due to rain or the like. Thus, by measuring the distance from the vehicle X (the ranging sensor 10) to a plurality of points on the road surface in the measurement area P, the ranging sensor 10 can detect a wet condition of the road surface that may affect the travel of the vehicle X.

### [Determination Processing Example of Road Surface Condition (2)]

In the determination processing example (2), a threshold value C2 is used as the threshold value C. The threshold value C2 is acquired by adding a value E for absorbing measurement errors (in other words, for allowing errors in measurement values that are determination criteria) to the distance indicated by the aforementioned reference data stored in the reference data storage unit 412.

Based on the information acquired by the sensor information acquisition unit 411, the determination unit 413 determines that the road surface indicated by the partial area PB is wet if the partial area PB is included in the measurement area P. That is, when the vehicle X travels, the determination unit 413 determines that the road surface is wet if the measurement value measured by the ranging sensor 10 at a certain position A is longer than the distance to the relevant position A in the reference data by the value E or more.

Specifically, the determination unit 413 acquires over time the information acquired by the sensor information acquisition unit 411 during the travel of the vehicle X, and the position information of the vehicle X when acquiring the information. Further, the determination unit 413 acquires position information and information on the distance from the relevant vehicle X to the road surface in the measurement direction acquired by the determination unit 413, from among the reference data stored in the reference data storage unit 412.

Further, the determination unit 413 determines that the partial area PB is included in the measurement area P when there are a predetermined number D or more of estimated distant points which are adjacent to each other on the road surface. An estimated distant point is a position where a measurement value measured by the ranging sensor 10 is longer than the threshold value C2 which is obtained by adding the value E to the distance from the vehicle X to the road surface that is acquired from the reference data storage unit 412. The determination unit 413 determines that the road surface is wet when having determined that the partial area PB is included in the measurement area P.

Note that the determination unit 413 may perform step S1 and step S3 in an order opposite to the order illustrated in FIG. 3. Further, it is possible for the determination unit 413 to perform only one of either step S1 or step S3.

When the determination unit 413 determines that the road surface is wet, the driving control unit 42 outputs an instruction to the automatic driving mechanism 30 to reduce the driving speed of the vehicle X to less than a normal speed (step S4). The automatic driving mechanism 30 reduces the traveling speed in the automatic driving when having acquired the instruction from the driving control unit 42.

Thereafter, when the road surface has dried and the determination unit 413 has determined that neither of the partial areas PA and PB is included in the measurement area P in a section having a distance greater than or equal to a predetermined value ("YES" in step S5), it is determined that the road surface is dry (step S6). When the determination unit 413 has determined that the road surface is dry, the driving control unit 42 outputs an instruction to the automatic driving mechanism 30 to return the driving speed of the vehicle to the normal speed (step S7). The automatic driving mechanism 30 returns the driving speed of the automatic driving to the normal speed when having acquired the instruction from the driving control unit 42.

According to the above embodiment, a wet road surface can be accurately detected based on the reception state of light emitted from the light sensor. This makes it possible to perform detection processing of a wet road surface. Further, when using the light sensor for obstacle detection or for self-position estimation, which is mounted in advance on the vehicle X as the light sensor of the present embodiment, the road surface condition described above can be detected at a low cost without mounting a new device for detecting the road surface condition on the vehicle.

The position information detection sensor 20 may be configured of a self-position estimation device using LiDAR (light detection and ranging). In this case, one self-position estimation device may have both the function of the ranging sensor 10 and the function of the position information detection sensor 20. The self-position estimation device estimates the current position of the self-position estimation device by performing scan matching between map data held in advance and data acquired by the light sensor, for example.

The ranging sensor 10 may measure the distance from the vehicle X to the road surface at a plurality of positions in the measurement area P using a plurality of transmission and reception elements. In this case, if some of the transmission and reception elements fail, the ranging sensor 10 cannot acquire measurement results regarding the area to be measured in which the failed transmission and reception elements are used. In this case, even if the road surface is not wet, since the partial area PA is included in the measurement area P, the determination unit 413 may determine that the road surface is wet.

Meanwhile, during rain, the light emitted from the ranging sensor 10 may be reflected in an irregular manner by raindrops in the air, and values (positions) recognized as noise whose measurement results are not in the proper range tend to increase in the whole measurement area P to be measured. For this reason, when the number of measurement results (the number of positions) recognized as noise by the ranging sensor 10 is equal to or greater than a predetermined value and the partial area PA is included in the measurement area P, the determination unit 413 may determine that the road surface is wet due to rain. Thus, the ranging sensor 10 can detect a wet road surface with higher accuracy by excluding erroneous determination due to a failure of the transmission and reception elements.

The reference data stored in the reference data storage unit 412 may be reference data measured when another vehicle Y has traveled in the relevant section. In this case, the sensor information acquisition unit 411 of the road surface condition determination device 41 acquires the amount of deviation in the installation position and measurement direction of the ranging sensor 10, between the vehicle Y that measures the reference data and the vehicle X that uses the reference data. Thereafter, based on the acquired amount of deviation, the sensor information acquisition unit 411 converts the reference data measured by the ranging sensor of the vehicle Y into the reference data to be used by the road surface condition determination device 41 of the vehicle X, and uses the converted reference data for the determination processing of the road surface condition.

A central management device that is connected wirelessly to the on-vehicle devices 40 of a plurality of vehicles including the vehicle X may be installed, and the function of the reference data storage unit 412 may be provided in this central management device. In this case, the on-vehicle device 40 of each vehicle wirelessly transmits, to the central management device, the information on the distance to the road surface in each measurement direction measured by the range measurement sensor 10, each time the respective vehicles travel when the road surface is not wet, together with the information on the traveling position, the distance, the time and the installation position of the range measurement sensor 10 in the relevant vehicle, and the on-vehicle device 40 causes the central management device to store such information as the reference data.

The on-vehicle device 40 of the vehicle X acquires, from the central management device, the latest reference data measured by another vehicle Y or by the vehicle X in the past regarding a traveling point. The sensor information acquisition unit 411 acquires the amount of deviation in the installation position and measurement direction of the ranging sensor 10, between the vehicle that has measured the acquired reference data and the vehicle X that uses such reference data. Thereafter, based on the acquired amount of deviation, the sensor information acquisition unit 411 converts the reference data acquired from the central management device into the reference data to be used by the road surface condition determination unit 41 of the vehicle X, and uses the converted reference data for the determination processing of the road surface condition.

Thus, by updating the reference data of the relevant position each time a plurality of vehicles travel and by making each vehicle share the latest reference data, it is possible to perform the determination processing with high accuracy even when a road surface changes in shape or the like.

In addition, the reference data storage unit of the central management device may temporarily store the information of measurement values for each vehicle position, time, and measurement direction, measured by the ranging sensor when each of the vehicles travels, regardless of the wet condition of the road surface, and such information may be shared by a plurality of vehicles. In this case, the determination section 413 determines whether the road surface is wet with respect to the position where the vehicle X is scheduled to travel, by using the information of measurement values which are measured using another vehicle and stored in the reference data storage unit within a predetermined time.

Thus, by updating measurement values of a relevant position each time a plurality of vehicles travel and by making other vehicles use the measurement values, it is possible to detect wetness and dryness of a road surface more quickly before traveling at the relevant position, thereby improving driving efficiency.

In the above embodiment, when the determination unit 413 has determined that a road surface is wet, the driving control unit 42 reduces the speed of the vehicle X to below the normal speed. However, the driving control unit 42 may stop the vehicle X instead of decelerating the vehicle X. By reducing the speed of the vehicle X to below the normal speed or stopping the vehicle X when it is determined that the road surface is wet, the vehicle X can drive safely even when the road surface is slippery.

Although some embodiments have been described, the embodiments may be changed or modified based on the above disclosure. All of the components of the above embodiments and all of the features described within the scope of the claims may be extracted and combined individually, provided they are not mutually inconsistent.

According to the present disclosure, it is possible to contribute to Goal 11 of the United Nations-led Sustainable Development Goals (SDGs): "Make cities and human settlements inclusive, safe, resilient and sustainable".

### [LIST OF REFERENCE NUMERALS]

- 1:: Automatic driving system
- 10:: Ranging sensor
- 20:: Position information detection sensor
- 30:: Automatic driving mechanism
- 40:: On-vehicle device
- 41:: Road surface condition determination device
- 42:: Driving control unit
- 50:: Road surface condition determination system
- 411:: Sensor information acquisition unit
- 412:: Reference data storage unit
- 413:: Determination unit

## Claims

1. A road surface condition determination system comprising:
a ranging sensor that is installed at a predetermined position in a vehicle, emits light toward a road surface in a measurement area around the vehicle and receives reflected light of the emitted light, and measures a distance to the road surface based on a light reception state of the reflected light; and
a determination unit that determines that the road surface is wet when the reflected light is not received by the ranging sensor, or when a measurement value measured by the ranging sensor is longer than a predetermined value.

2. The road surface condition determination system according to claim 1, wherein
the ranging sensor measures a distance to a plurality of points on the road surface in the measurement area, and
the determination unit determines that the road surface is wet when the measurement area includes a partial area in which the reflected light is not received by the ranging sensor, or when the measurement incudes a partial area in which a measurement value measured by the ranging sensor is longer than a predetermined value.

3. The road surface condition determination system according to claim 2, wherein
the determination unit determines that the road surface is wet when a quantity of measurement results recognized as noise among measurement results regarding reflected light of a plurality of light beams emitted by the ranging sensor is equal to or greater than a predetermined value and when a partial area in which the reflected light of the plurality of light beams emitted by the ranging sensor is not received is included in the measurement area.

4. The road surface condition determination system according to any one of claims 1 to 3, wherein the ranging sensor is configured of a light sensor for obstacle detection or a light sensor for self-position estimation, which is installed in advance in the vehicle.

5. The road surface condition determination system according to any one of claims 1 to 4, further comprising:
a reference data storage unit that stores, as reference data, information on a distance to the road surface that is measured by the ranging sensor for each position of the vehicle and each measurement direction when the vehicle or another vehicle travels on the road surface that is not wet, wherein
in a case where the vehicle travels, the determination unit determines that the road surface is wet when a measurement value of the distance to the road surface in the measurement direction measured by the ranging sensor at a predetermined position is longer than a distance to the road surface at a relevant position and in the measurement direction in the reference data.

6. The road surface condition determination system according to claim 5, wherein
the reference data storage unit temporarily stores information of measurement values for each vehicle position, time, and measurement direction, measured by the ranging sensor when the vehicle or another vehicle travels, regardless of a wet condition of the road surface, and
the determination unit determines whether the road surface is wet with respect to a position where the vehicle is scheduled to travel, by using the information of the measurement values which are measured using another vehicle and stored in the reference data storage unit within a predetermined time.

7. A road surface condition determination device comprising:
a determination unit that is connected to a ranging sensor, the ranging sensor being installed at a predetermined position in a vehicle, emitting light toward a road surface in a measurement area around the vehicle and receiving reflected light of the emitted light, and measuring a distance to the road surface based on a light reception state of the reflected light,
the determination unit determines that the road surface is wet when the reflected light is not received by the ranging sensor, or when a measurement value measured by the ranging sensor is longer than a predetermined value.

8. A vehicle driving control device comprising:
an output unit that is connected to the road surface condition determination device of claim 7, and outputs an instruction to reduce a driving speed of the vehicle or stop the vehicle when the road surface condition determination device determines that the road surface is wet.

9. A road surface condition determination method comprising:
determining that a road surface is wet by means of a road surface condition determination device connected to a ranging sensor, when reflected light is not received by the ranging sensor or when a measurement value measured by the ranging sensor is longer than a predetermined value, the ranging sensor being installed at a predetermined position in a vehicle, emitting light toward a road surface in a measurement area around the vehicle and receiving the reflected light of the emitted light, and measuring a distance to the road surface based on a light reception state of the reflected light.
